# EUROPEAN PATENT APPLICATION

(11) **EP 2 433 702 A1**
(43) Date of publication of application: **28.03.2012**
(21) Application number: 11182621.0
(22) Date of filing: 23.09.2011
(51) Int. Cl.: B01D 69/00, E21B 21/06, C09K 8/52, B01D 61/00, C10L 3/10

(54) **Process for separating kinetic hydrate polymer inhibitors**

(30) Priority: 27.09.2010 EP 10180242
(71) Applicant: Shell Internationale Research Maatschappij B.V., 2596 HR The Hague (NL)
(72) Inventor: SCHRADER, Guillo Alexander, 1031 HW AMSTERDAM (NL)
(74) Representative: Matthezing, Robert Maarten

(57) **Abstract**

Process for separating kinetic hydrate inhibitor polymers having a molecular weight of at least 1000 Da from an aqueous mixture further comprising hydrocarbons and salts which process comprises contacting the aqueous mixture with the feed side of a spirally wound membrane module, and obtaining at the permeate side of the membrane an aqueous permeate of which the concentration of kinetic hydrate inhibitor polymer is at most 20 % of that of the aqueous mixture.

## Description

The present invention is directed to a process for separating kinetic hydrate inhibitor polymers having a molecular weight of at least 1000 dalton (Da) from an aqueous mixture further comprising hydrocarbons and salts.

Low-boiling hydrocarbons, such as methane, ethane, propane, butane and iso-butane, are normally present in conduits which are used for the transport and processing of natural gas and crude oil. If a substantial amount of water also is present, it is possible that the water/ hydrocarbon mixture forms gas hydrate crystals under conditions of low temperature and elevated pressure. Gas hydrates are clathrates (inclusion compounds) in which small hydrocarbon molecules are trapped in a lattice consisting of water molecules. As the maximum temperature at which gas hydrates can be formed strongly depends on the pressure of the system, hydrates are markedly different from ice.

Gas hydrate crystals which grow inside a conduit such as a pipeline are known to be able to block or even damage the conduit. In order to cope with this undesired phenomenon, a number of remedies has been proposed in the past such as removal of free water, maintaining elevated temperatures and/or reduced pressures or the addition of chemicals such as melting point depressants (antifreezes). Melting point depressants, typical examples of which are methanol and various glycols, often have to be added in substantial amounts, typically in the order of several tens of percent by weight of the water present, in order to be effective. This is disadvantageous with respect to costs of the materials, their storage facilities and their recovery which is rather expensive. Melting point depressants also are referred to as thermodynamic hydrate inhibitors.

Another approach to keep the fluids in the conduits flowing is the addition of kinetic hydrate inhibitors which prevent the formation of hydrates on a macroscopic scale, i.e. as observable by the naked eye, and/or hydrate anti-agglomerants which are capable of preventing agglomeration of hydrate crystals. Compared to the amounts of antifreeze required, already small amounts of such compounds are normally effective in preventing the blockage of a conduit by hydrates. The principles of interfering with crystal growth and/or agglomeration are known. Different kinds of kinetic hydrate inhibitors and/or hydrate anti-agglomerants can be applied.

Liquefied natural gas is natural gas (predominantly methane) that has been converted temporarily to liquid form for ease of storage or transport. Water, hydrogen sulfide, carbon dioxide and other components that will freeze under the low temperatures needed for storage or that will be destructive to the liquefaction facility, have to be removed beforehand. The actual practice of removing these compounds is quite complex but usually involves condensate removal, water removal, separation of natural gas liquids and sulfur containing compounds and carbon dioxide removal. To prevent hydrate formation, kinetic hydrate inhibitor polymers are often added to raw natural gas streams before pipeline transport or any further treatment. These kinetic hydrate inhibitor polymers generally are separated and removed before liquefaction as there they can create problems such as depositing on heat exchanger equipment. Furthermore, the presence of hydrate inhibitors becomes unnecessary as soon as the system operates outside the stable hydrate conditions. If these polymers are present in the produced aqueous phase, they may have to be removed from the aqueous phase before conventional waste water treatment can be carried out as such treatment may not be able to deal with these polymers. For example, the polymers may be poorly bio-degradable and/or tend to block the pores of water treatment filtration equipment.

However, removal of kinetic hydrate inhibitor polymers from waste water has been found to be difficult. The choice in removal methods furthermore is limited because these polymers may deposit easily on the equipment used if the salt concentration and/or the temperature of the aqueous solution is too high. Some hydrate inhibitor polymers have the property that their solubility in water decreases with increasing temperature and therefore they exhibit reverse solubility versus temperature behavior. This phenomenon is especially well known for glycols. In the present application, the cloud point temperature of hydrate inhibitor polymers is the temperature above which the mixture starts to phase separate and two phases appear for a given polymer concentration and at given salinity. There are even less methods for removing these kinds of polymers as their removal is restricted by the maximum operating temperature which can be applied.

US-A-2008/0312478 describes a method for removing kinetic inhibitors from an aqueous phase which method involves heating the aqueous phase to a temperature above the boiling point of the water. This separation method is disadvantageous from an energy efficiency point of view while could lead to problems in removing a polymer having a cloud point below the distillation temperature.

It has now surprisingly been found that the polymers can be removed in an easy way by a process comprising separating kinetic hydrate inhibitor polymers having a molecular weight of at least 1000 Da from an aqueous mixture further comprising hydrocarbons and salts which process comprises contacting the aqueous mixture with the feed side of a spirally wound membrane module, and obtaining at the permeate side of the membrane an aqueous permeate of which the concentration of kinetic hydrate inhibitor polymer is at most 20 % of the kinetic hydrate inhibitor polymer of the aqueous mixture. It is preferred that the concentration of kinetic hydrate inhibitor polymer in the permeate is at most 15 %, more preferably at most 10 %, more specifically at most 5 % of the kinetic hydrate inhibitor polymer as present in the aqueous mixture.

A spirally wound membrane module typically comprises a membrane assembly of two membrane sheets between which a permeate spacer sheet is sandwiched, and which membrane assembly is sealed at three sides. The fourth side is connected to a permeate outlet conduit such that the area between the membranes is in fluid communication with the interior of the conduit. On top of one of the membranes a feed spacer sheet is arranged, and the assembly with feed spacer sheet is rolled up around the permeate outlet conduit, to form a substantially cylindrical spirally wound membrane module. During normal operation, a feed mixture is passed from one end of the cylindrical module between the membrane assemblies, along the feed spacer sheet sandwiched between feed sides of the membranes. Part of the feed mixture passes through either one of the membrane sheets to the permeate side, and permeate thus obtained flows along the permeate spacer sheet into the permeate outlet conduit from which it is removed.

Preferably the feed spacer has a thickness of at least 0.6 mm, more preferably at least 1 mm, to provide sufficient space at the feed side, and typically a maximum thickness of 3 mm to allow sufficient membrane surface to be packed into a spirally wound module.

The membrane suitably comprises a top layer made of a dense membrane and a base layer (support) made of a porous membrane. The membrane is suitably so arranged that the permeate flows first through the dense membrane top layer and then through the base layer, so that the pressure difference over the membrane pushes the top layer onto the base layer. The dense membrane layer is the actual membrane which separates the contaminants from the hydrocarbon mixture. The dense membrane, which is well known to one skilled in the art, has properties such that the hydrocarbon mixture passes said membrane by dissolving in and diffusing through its structure. Preferably the dense membrane layer has a so-called cross-linked structure as for example described in WO-A-9627430. The thickness of the dense membrane layer is preferably as thin as possible. Suitably the thickness is between 1 and 15 micrometer, preferably between 1 and 5 micrometer. Suitable dense membranes can be made from a polysiloxane, in particular from poly(di-methyl siloxane) (PDMS). The porous membrane layer provides mechanical strength to the membrane. Suitable porous membranes are PolyAcryloNitrile (PAN), PolyAmideImide + TiO₂ (PAI), PolyEtherImide (PEI), PolyVinylideneDiFluoride (PVDF), and porous PolyTetraFluoroEthylene (PTFE), and can be of the type commonly used for ultrafiltration, nanofiltration or reverse osmosis.

By choosing the right membrane, hydrocarbons can be removed besides the polymers while salts are allowed through. The presence of hydrocarbons in the retentate is advantageous in that it makes the permeate water even purer. The kinetic hydrate inhibitor polymer comprising hydrocarbonaceous retentate can either be sent to an incinerator, a wet air oxidation unit, a supercritical water oxidation unit or be recycled. Recycling has the advantage that it allows the kinetic hydrate inhibitor polymers to be used again and will make that some of the recycled hydrocarbons will become part of the hydrocarbonaceous phase instead of the aqueous phase.

The retentate generally will be a kinetic hydrate inhibitor polymer containing water/hydrocarbon mixture. The exact amount of water in the retentate depends on the process conditions applied. If the viscosity of the retentate is high, it can be preferred to add solvent to the retentate before it is processed further such as recycled.

The kinetic hydrate inhibitor polymer for use in the present invention preferably is a water-soluble polymer having a molecular weight of at least 1000 Da, preferably of at least 1500 Da, more specifically at least 2000 Da, more preferably at least 3000 Da. The molecular weight is the weight average which can be determined readily by someone skilled in the art with the help of chromatography as described by ASTM method D5296-05. A further characteristic of kinetic hydrate inhibitor polymers is that they inhibit hydrocarbon molecules becoming trapped in a water lattice. The structure of such compounds can vary widely. Preferably, these polymers are water-soluble polymers containing at least one amide group, preferably comprising a plurality of amide groups. The polymers can be either homopolymers or copolymers containing amide groups. The polymers preferably are polyamides and/or polyester amides. The expression polymers indicates any large molecule having the indicated molecular weight. Such polymer can contain a large number of small repeat units. An example of a linear polyamide kinetic hydrate inhibitor polymer is polyvinyl pyrrolidone. Alternatively, the polymer can be a hyper-branched, also referred to as dendritic, polymer which is functionalized to provide the necessary properties.

Preferred hydrate inhibitors are dendrimeric compounds which are three-dimensional, highly branched molecules comprising a core and two or more branches. The end of the branches preferably is functionalized, more specifically by containing end-group comprising both nitrogen and oxygen. A branch is composed of structural units which are bound radially to the core and which extend outwards. The structural units have at least two reactive monofunctional groups and/or at least one monofunctional group and one multifunctional group. The term multifunctional is understood as having a functionality of 2 or higher. To each functionality a new structural unit may be linked, a higher branching generation being produced as a result. Most preferred hydrate inhibitors are dendrimeric polyester amides, more specifically those as described in WO-A-2001/77270. Examples of a specific class of dendrimeric compounds are the compounds commercially referred to as HYBRANES (the word HYBRANE is a trademark). Of these, HYBRANE S1200 and HYBRANE HA1300 are especially preferred. These compounds are commercially obtainable from DSM, Geleen, the Netherlands.

It is preferred to use the dendrimeric compounds as a solution of the compound in an organic solvent such as an alcohol.

The separation of kinetic hydrate inhibitor polymers can be carried out under process conditions conventionally applied. During separation the pressure difference across the membrane is typically between 5 and 60 bar and more preferably between 10 and 30 bar. The temperature of the aqueous mixture from which the polymers are to be separated, preferably is at most 90 °C. If the kinetic hydrate inhibitor polymer has a cloud point under actual operating conditions, it should be ensured that the operating temperature is below the cloud point. The actual operating temperature preferably is at most 60 °C, more specifically at most 50 °C. Sufficient cross-flow should be applied during operation to minimize build-up of polymeric contaminants. The percentage of kinetic hydrate inhibitor polymer removed in the process according to the present invention is to be measured at 15 %wt recovery of the aqueous mixture supplied and at 15 bara operating pressure.

A process into which the present invention can be incorporated is a process comprising
(a) adding a kinetic hydrate inhibitor polymer having a molecular weight of at least 1000 Da to raw natural gas,
(b) sending the mixture obtained in step (a) to a slug-catcher, and
(c) separating the kinetic hydrate inhibitor polymer from at least part of the product of step (b) in a process according to the present invention.

The kinetic hydrate inhibitor polymer containing retentate obtained in step (c) can be added to raw natural gas.

The product of the slug catcher can be sent to a phase separator in which the mixture is separated into a hydrocarbonaceous gas, a liquid hydrocarbonaceous fraction and a bottom aqueous fraction so that only the bottom aqueous fraction is to be subjected to the process according to the present invention in step (c).

The permeate obtained in step (c) preferably is subsequently subjected to condensate removal, water removal, separation of natural gas liquids and sulfur and carbon dioxide removal before being transported and/or liquefied.

Raw natural gas is gas as obtained from underground gas fields or extracted at the surface from the fluids produced from oil wells. The temperature and pressure of the raw natural can vary widely.

The kinetic hydrate inhibitor polymer can be added to the raw natural gas in any way known to be suitable by someone skilled in the art. Preferably, the hydrate inhibitor is added as a solution as this facilitates mixing of the inhibitor with the fluid. It is possible to add further oil-field chemicals such as corrosion and scale inhibitors and demulsifiers. If any of these compounds are polymers of sufficiently high weight, these polymers can also be recovered in the process according to the present invention and also can be recycled.

The slug catcher for use in step (b) is a vessel with sufficient buffer volume to store plugs of liquid, called slugs, which exit the pipeline. The slug catcher feeds liquid at a lower rate to downstream processing units which prevents liquid overload of those units.

A phase separator which is optionally used for further treating the product of step (b) preferably is a three-phase separator comprising a normally horizontal vessel defining a liquid separation space and a gas space, which vessel has an inlet end space provided with a feed inlet and an outlet end space provided with separate outlets for the gaseous, the hydrocarbonaceous and the aqueous phase. A preferred separator has been described in US patent specification 6537458.

Stripping involves treating the aqueous mixture with an inert gas such as clean natural gas or steam to remove gaseous hydrocarbons such as dissolved sour gases for example hydrogen sulphide. Steam stripping is often carried out in a heated column. It has been found that stripping of the aqueous mixture can facilitate the membrane separation.

Another option is to treat the aqueous solution in the process according to the present invention and subsequently subject the permeate to stripping. This has the advantage that the kinetic hydrate inhibitor polymer will not interfere in your stripping column. Circumstances such as the line-up and kinetic hydrate inhibitor polymer applied, determine whether stripping is to be applied and if so, either before or after the membrane treatment.

The various fractions obtained in the process of the present invention can be treated further as known to the skilled person to be advantageous for a given set of circumstances.

## Claims

1. Process for separating kinetic hydrate inhibitor polymers having a molecular weight of at least 1000 Da from an aqueous mixture further comprising hydrocarbons and salts which process comprises contacting the aqueous mixture with the feed side of a spirally wound membrane module, and obtaining at the permeate side of the membrane an aqueous permeate of which the concentration of kinetic hydrate inhibitor polymer is at most 20 % of the kinetic hydrate inhibitor polymer concentration of the aqueous mixture.

2. Process according to claim 1, wherein the temperature of the aqueous mixture is at most 90 °C.

3. Process according to claim 1 or 2, wherein the aqueous mixture comprises liquid natural gas condensate.

4. Process according to any one of claims 1-3, wherein the kinetic hydrate inhibitor polymer is a dendrimeric compound.

5. Process comprising
(a) adding a kinetic hydrate inhibitor polymer having a molecular weight of at least 1000 Da to raw natural gas,
(b) sending the mixture obtained in step (a) to a slug-catcher, and
(c) separating the kinetic hydrate inhibitor polymer from at least part of the product of step (b) in a process according to any one of claims 1 to 4.
